(19) Europäisches Patentamt / European Patent Office / Office européen des brevets

(11) **EP 2 842 232 B1**

(12) **FASCICULE DE BREVET EUROPEEN**

(45) Date de publication et mention
de la délivrance du brevet:
**21.09.2016 Bulletin 2016/38**

(51) Int Cl.:
***H03M 13/09*** *(2006.01)*       ***G06F 21/55*** *(2013.01)*
***H04L 9/00*** *(2006.01)*       ***G06F 21/64*** *(2013.01)*

(21) Numéro de dépôt: **13719930.3**

(22) Date de dépôt: **26.03.2013**

(86) Numéro de dépôt international:
**PCT/FR2013/050646**

(87) Numéro de publication internationale:
**WO 2013/160575 (31.10.2013 Gazette 2013/44)**

(54) **PROCÉDÉ DE CONTRÔLE DE REDONDANCE CYCLIQUE PROTÉGÉ CONTRE UNE ATTAQUE PAR CANAL AUXILIAIRE**

ZYKLISCHES REDUNDANZPRÜFUNGSVERFAHREN MIT SCHUTZ VOR SEITENKANALANGRIFFEN

CYCLIC REDUNDANCY CHECK METHOD WITH PROTECTION FROM SIDE CHANNEL ATTACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2012 FR 1253804**

(43) Date de publication de la demande:
**04.03.2015 Bulletin 2015/10**

(73) Titulaire: **Inside Secure
13590 Meyreuil (FR)**

(72) Inventeurs:
• **ROUSSELLET, Mylène
13119 Saint Savournin (FR)**
• **VERNEUIL, Vincent
22529 Hamburg (DE)**

(74) Mandataire: **Marchand, André et al
OMNIPAT
24 Place des Martyrs de la Résistance
13100 Aix-en-Provence (FR)**

(56) Documents cités:
**EP-A1- 1 912 148**

• **GORSHE S S: "CRC-16 polynomials optimized for applications using self-synchronous scramblers", PROCEEDINGS OF IEEE INTERNATIONAL CONFERENCE ON COMMUNICATIONS - 28 APRIL - 2 MAY 2002 - NEW YORK, NY, USA, IEEE, PISCATAWAY, NJ, USA, vol. 5, 28 avril 2002 (2002-04-28), pages 2791-2795, XP010589989, DOI: 10.1109/ICC.2002.997351 ISBN: 978-0-7803-7400-3**

**Description**

La présente invention concerne un procédé de traitement d'une donnée binaire, comprenant une étape de calcul d'un code de contrôle de redondance cyclique au moyen d'un polynôme générateur. La présente invention concerne également la protection des circuits intégrés à semi-conducteur contre des attaques par canaux auxiliaires.

Les circuits intégrés sur puce de semi-conducteur utilisés dans des applications sécurisées font l'objet de diverses attaques, notamment des attaques par canaux auxiliaires basées sur l'observation de leur consommation de courant, leur rayonnement magnétique ou électromagnétique. De telles attaques visent à découvrir les données sensibles qu'ils manipulent, par exemple des clés de cryptographie, des données d'application, des variables intermédiaires de calcul...

Les attaques par canaux auxiliaires les plus répandues mettent en oeuvre des méthodes d'analyse statistique telle que l'analyse DPA ("Differential Power Analysis") ou CPA ("Correlation Power Analysis"). Ces techniques d'analyse permettent de retrouver la clé d'un algorithme de cryptographie grâce à l'acquisition de nombreuses courbes de consommation du circuit. L'analyse DPA consiste dans un classement statistique de courbes de consommation de courant en fonction d'une hypothèse sur la clé recherchée. L'analyse CPA se base sur un modèle de consommation de courant et consiste à calculer un coefficient de corrélation entre, d'une part, les points de consommation mesurée et, d'autre part, une valeur estimée de consommation, calculée à partir du modèle de consommation et d'une hypothèse sur l'opération qu'exécute le circuit.

Diverses contre-mesures matérielles et/ou logicielles sont généralement mises en oeuvre pour contrer de telles attaques. Notamment, les données sensibles sont généralement stockées ou transférées sous forme masquée, c'est-à-dire après avoir été combinées avec un masque binaire supposé inconnu d'un attaquant, et ne sont généralement démasquées que lorsqu'elles se trouvent dans une zone entièrement protégée contre les attaques.

D'autre part, les données manipulées par les circuits intégrés sont généralement protégées contre une corruption de données pouvant être accidentelle ou résulter d'un acte volontaire. Une corruption de données peut par exemple se produire lors d'une altération de la tension de seuil de cellules mémoires dans lesquelles les données sont stockées, d'une interférence électromagnétique pendant que des données sont véhiculées sur un bus de données, ou lors d'une attaque par injection de faute. Les données, pendant leur stockage ou leur transfert, sont donc accompagnées d'un code de détection d'erreur appelé "somme de contrôle" ("checksum"). Il peut s'agir par exemple d'un bit de parité, d'un code de Hamming, d'un code CRC ou code de contrôle de redondance cyclique ("cyclic redundancy check"), etc.

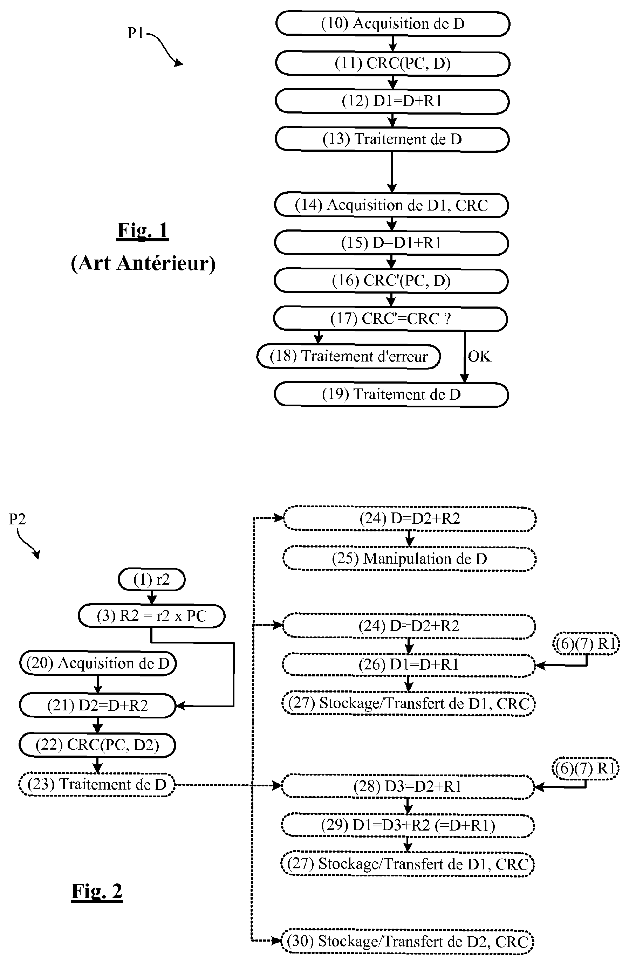

La figure 1 montre schématiquement un procédé classique P1 de traitement d'une donnée D combinant le masquage et la détection d'erreur au moyen d'un code CRC. Le procédé comprend une phase initiale de traitement de la donnée et une phase de traitement ultérieure. La phase initiale comprend :

- une étape 10 d'acquisition de la donnée D,
- une étape 11 de calcul du code CRC de la donnée D au moyen d'un polynôme générateur PC,
- une étape 12 de masquage de la donnée avec un masque R1, par addition de celle-ci avec le masque R1, pour obtenir une donnée masquée D1, et
- une étape 13 de traitement de la donnée D.

A l'étape 11, le code CRC est calculé par division polynomiale de la donnée par le polynôme PC, effectuée dans GF(2)[X], soit le corps des polynômes dont les coefficients appartiennent au corps fini GF(2) (corps de Galois), qui forme le plus petit corps fini connu. L'addition exécutée à l'étape 12 est l'addition polynomiale dans GF(2)[X] correspondant en algèbre booléenne au OU Exclusif bit à bit du masque R1 et de la donnée D. Enfin, l'étape de traitement 13 peut consister dans le stockage de la donnée dans une mémoire ou sa transmission à une entité autre que celle qui a exécuté les étapes 10 à 12. La donnée est dans ce cas stockée ou transmise sous sa forme masquée D1 et est accompagnée du code CRC.

La phase de traitement ultérieure comprend :

- une étape 14 d'acquisition de la donnée masquée D1 et de son code CRC (réception ou lecture dans une mémoire),
- une étape 15 de démasquage de la donnée D, c'est-à-dire de retrait du masque R1, en additionnant la donnée masquée D1 avec le masque R1,
- une étape 16 de calcul d'un code CRC' de la donnée D, au moyen du polynôme PC,
- une étape 17 de comparaison des codes CRC et CRC',
- si les codes CRC et CRC' sont différents, une étape 18 de traitement d'erreur, et
- si les codes CRC et CRC' sont identiques, une étape 19 de traitement de la donnée D.

Des modes de réalisation de l'invention se fondent sur la découverte d'une faille de sécurité dans ce procédé de traitement de données. Cette faille de sécurité concerne l'étape 11 ou 16 de calcul du code CRC, effectuée à partir de la donnée démasquée, sans quoi le code CRC serait erroné. Or, on a découvert que cette étape de calcul est susceptible de certains types d'attaques pouvant permettre de découvrir la valeur de la donnée D. En particulier, une attaque de type "template" (attaque au moyen d'un modèle) est envisageable. L'attaque consiste à former une base de données de tous les profils de consommation électrique du circuit réalisant le calcul du code CRC en fonction de la valeur de la donnée D. L'observation du profil de consommation du circuit pendant le calcul du code CRC permet ensuite de retrouver, dans la base de données, la valeur correspondante de la donnée D. Une attaque de type DPA pendant le calcul du code CRC pourrait également, dans certaines applications, être envisageable.

Il pourrait être donc souhaité d'améliorer la sécurité offerte par un procédé de traitement de données incluant un calcul de code CRC.

Le document EP 1 912 148 divulgue une méthode de protection contre des attaques DPA et CPA dans laquelle le code CRC d'un message est calculé sur des données aléatoires obtenues à partir du message, et plus précisément comme somme des CRC d'une pluralité de séquences aléatoires dont la somme est égale au message, par exemple comme somme du CRC d'une séquence aléatoire et du CRC de la somme du message et de la séquence aléatoire.

Des modes de réalisation de l'invention concernent un procédé de traitement d'une donnée binaire, comprenant une étape de calcul d'un code de contrôle de redondance cyclique de la donnée au moyen d'un polynôme générateur, dans lequel l'étape de calcul du code de contrôle de redondance cyclique comprend les étapes consistant à masquer la donnée avec un masque binaire aléatoire qui est un multiple du polynôme générateur, par addition polynomiale de la donnée et du masque, et générer le code de contrôle de redondance cyclique de la donnée à partir de la donnée masquée.

Selon un mode de réalisation, le procédé comprend les étapes consistant à fragmenter la donnée en au moins deux parties, masquer une première partie de la donnée avec un premier masque binaire aléatoire qui est un multiple du polynôme générateur, et générer un premier code de contrôle de redondance cyclique de la première partie masquée, concaténer le premier code de contrôle de redondance cyclique avec une partie suivante de la donnée, pour former une donnée intermédiaire, masquer la donnée intermédiaire avec un second masque binaire aléatoire qui est un multiple du polynôme générateur, et générer un second code de contrôle de redondance cyclique de la donnée intermédiaire masquée.

Selon un mode de réalisation, le procédé comprend une étape de génération du masque binaire aléatoire comprenant les étapes consistant à générer un nombre aléatoire quelconque, et multiplier le nombre aléatoire quelconque par le polynôme générateur.

Selon un mode de réalisation, la donnée comprend N bits et le polynôme générateur P bits, et le nombre aléatoire quelconque généré comprend au moins N - P bits.

Selon un mode de réalisation, le procédé comprend une étape de génération du masque binaire aléatoire comprenant les étapes consistant à générer un premier nombre aléatoire quelconque, multiplier le premier nombre aléatoire quelconque par le polynôme générateur pour obtenir une première partie de masque, générer au moins un second nombre aléatoire quelconque, multiplier le second nombre aléatoire quelconque par le polynôme générateur pour obtenir au moins une second partie de masque, et concaténer les première et seconde parties de masque.

Selon un mode de réalisation, la donnée comprend N bits et le polynôme générateur P bits, et chaque nombre aléatoire quelconque généré comprend un nombre de bits égal à (N-nP)/n, n étant le nombre de nombres aléatoires quelconques générés.

Selon un mode de réalisation, le procédé comprend les étapes consistant à acquérir la donnée sous une forme masquée avec un premier masque binaire aléatoire quelconque formant un masque de stockage ou de transfert, accompagnée d'un premier code de contrôle de redondance cyclique, retirer le premier masque de la donnée, masquer la donnée avec un second masque binaire aléatoire qui est un multiple du polynôme générateur, générer un second code de contrôle de redondance cyclique à partir de la donnée masquée avec le second masque, et comparer le premier et le second codes de contrôle de redondance cyclique.

Selon un mode de réalisation, le procédé comprend les étapes consistant à acquérir la donnée sous une forme masquée par un premier masque binaire aléatoire quelconque formant un masque de stockage ou de transfert, accompagnée d'un premier code de contrôle de redondance cyclique, masquer une seconde fois la donnée avec un second masque binaire aléatoire qui est un multiple du polynôme générateur, retirer le premier masque à la donnée masquée deux fois, générer un second code de contrôle de redondance cyclique à partir de la donnée masquée avec le second masque, et comparer le premier et le second codes de contrôle de redondance cyclique.

Selon un mode de réalisation, le procédé comprend les étapes consistant à acquérir la donnée sous une forme masquée avec un premier masque binaire qui est un multiple du polynôme générateur, formant un masque de stockage ou de transfert, générer un second code de contrôle de redondance cyclique à partir de la donnée masquée avec le premier masque, et comparer le premier et le second codes de contrôle de redondance cyclique.

Des modes de réalisation de l'invention concernent également un dispositif électronique comprenant des moyens de traitement d'une donnée, configuré pour mettre en oeuvre des étapes de traitement du procédé décrit ci-dessus.

Des modes de réalisation de l'invention concernent également un objet portatif comprenant un tel dispositif électronique.

Des modes de réalisation de l'invention concernent également un procédé de stockage ou de transfert d'une donnée accompagnée d'un code de contrôle de redondance cyclique de la donnée calculé au moyen d'un polynôme générateur (PC), comprenant une étape préalable de masquage de la donnée avec un masque binaire aléatoire par addition polynomiale de la donnée et du masque, dans lequel la donnée est stockée ou transférée sous une forme masquée avec un masque binaire aléatoire qui est un multiple dudit polynôme générateur.

Selon un mode de réalisation, le procédé comprend une étape de génération du masque binaire aléatoire comprenant les étapes consistant à générer un nombre aléatoire quelconque, et multiplier le nombre aléatoire quelconque par le polynôme générateur.

Selon un mode de réalisation, le procédé comprend une étape de génération du masque binaire aléatoire comprenant les étapes consistant à générer un premier nombre aléatoire quelconque, multiplier le premier nombre aléatoire quelconque par le polynôme générateur pour obtenir une première partie de masque, générer au moins un second nombre aléatoire quelconque, multiplier le second nombre aléatoire quelconque par le polynôme générateur pour obtenir au moins une seconde partie de masque, et concaténer les première et seconde parties de masque.

Des modes de réalisation de l'invention concernent également un dispositif électronique comprenant des moyens de stockage et de transfert d'une donnée, configuré pour stocker ou transférer la donnée conformément au procédé de stockage ou de transfert décrit ci-dessus.

Des modes de réalisation de procédés et de circuits de traitement de données selon l'invention seront décrits plus en détail dans la description qui suit, en se référant à titre non limitatif aux figures jointes parmi lesquelles :

- la figure 1 précédemment décrite montre des étapes d'un procédé de traitement de données classique,
- la figure 2 montre des étapes d'une première phase d'un procédé de traitement de données selon l'invention,
- la figure 3 montre des étapes d'une seconde phase du procédé de traitement de données selon l'invention,
- la figure 4 montre une variante de réalisation de la seconde phase du procédé,
- la figure 5 montre une autre variante de réalisation de la seconde phase du procédé,
- la figure 6 montre une première variante de certaines étapes du procédé de traitement de données selon l'invention,
- la figure 7 montre des dispositifs de traitement de données selon l'invention,
- la figure 8 montre un autre exemple de dispositif de traitement de données selon l'invention,
- la figure 9 montre un exemple de réalisation d'un circuit de calcul de code CRC selon l'invention, et
- la figure 10 montre une seconde variante de certaines étapes du procédé de traitement de données selon l'invention.

Des modes de réalisation de la présente invention se fondent sur la découverte que le code CRC d'une donnée peut être généré valablement à partir d'une donnée masquée, à condition que la donnée soit masquée au moyen d'un masque qui est un multiple du polynôme générateur du code CRC. Un masque aléatoire ayant cette propriété peut être généré à partir d'un nombre aléatoire, en multipliant le nombre aléatoire par le polynôme générateur. Considérons à titre d'exemple numérique le cas suivant :

1) soit une donnée D quelconque de 32 bits, par exemple D = a120b721$_h$, ("h" représentant l'écriture de la donnée en base 16). La donnée peut aussi s'écrire comme un polynôme de degré 31 :

$$D = X^{31}+X^{29}+X^{24}+X^{21}+X^{15}+X^{13}+X^{12}+X^{10}+X^9+X^8+X^5+1$$

2) soit un polynôme générateur PC de degré 16, par exemple le polynôme connu CRC-16-DECT :

$$PC = X^{16}+ X^{10}+ X^8+ X^7+ X^3+1,$$

formant un mot de 17 bits égal à 10589$_h$.

Il est à noter qu'un calcul conventionnel du code CRC de la donnée D, par division de celle-ci par le polynôme PC dans le corps fini GF(2)[X], donne un polynôme de degré 15, soit ici :

$$CRC = X^{15}+X^{12}+X^8+X^7+X^5+X^3+X+1,$$

en d'autres termes un code de 16 bits égal à 91ab$_h$.

3) au lieu de calculer le code CRC à partir de la donnée D, considérons un nombre aléatoire quelconque r2 de 15 bits, par exemple :

$$r2 = 2e03_h,$$

soit

$$r2 = X^{13} + X^{11} + X^{10} + X^9 + X + 1$$

4) multiplions r2 par le polynôme générateur, pour obtenir un masque R2 de 32 bits :

$$R2 = r2 \times PC = 2e83509b_h$$

5) masquons la donnée D avec le masque R2 (addition polynomiale dans GF(2)[X], correspondant à une opération OU Exclusif bit à bit), pour obtenir une donnée masquée D2, soit ici :

$$D2 = D + R2 = 8fa3e7ba_h$$

6) pour calculer le code CRC de la donnée D, effectuons la division polynomiale de la donnée masquée D2 par le polynôme PC dans GF(2)[X], soit la division polynomiale modulo 2. On obtient :

$$CRC = 91ab_h$$

Il apparaît donc que le code CRC calculé à partir de la donnée masquée D2 est identique au code CRC calculé à partir de la donnée non masquée D. Il peut être démontré que cette règle est valable pour tout masque R2 multiple de PC.

Dans un mode de réalisation préféré, le masque R2 a la même longueur que la donnée D à masquer, afin de masquer tous les bits de la donnée. Dans ce cas, la règle suivante est observée : si la donnée D comprend N bits et le polynôme PC comprend P bits, alors le nombre aléatoire quelconque r2 comprend Q bits avec Q égal à N-P bits. Dans l'exemple ci-dessus N=32, P=17, Q=15. Par ailleurs, le code CRC obtenu présente P-1 bits, soit ici 16 bits.

La figure 2 décrit une phase initiale P2 d'un mode de réalisation d'un procédé de traitement de données selon l'invention. La phase initiale comprend:

- une étape 1 de génération du nombre aléatoire r2,
- une étape 3 de génération du masque aléatoire R2 par multiplication de r2 par PC,
- une étape 20 d'acquisition de la donnée D,
- une étape 21 de masquage de la donnée avec le masque R2, en additionnant celle-ci au masque R2, pour obtenir la donnée masquée D2, et
- une étape 22 de calcul du code CRC de la donnée D à partir du polynôme PC et de la donnée masquée D2, de sorte que l'étape de calcul est protégée notamment contre une attaque de type "template", et
- une étape 23 de traitement de la donnée.

Divers exemples de réalisation de l'étape de traitement 23 sont montrés sur la figure 2. On suppose que l'étape 23 est réalisée immédiatement après le calcul du code CRC et que le masque R2 est à la disposition de l'organe ou de l'entité qui exécute cette étape.

Exemple 1 : l'étape de traitement 23 comprend une étape 24 de retrait du masque R2, par addition polynomiale dans GF(2)[X] de la donnée masquée D2 avec le masque R2, suivie d'une étape 25 de manipulation de la donnée non masquée D. Ces étapes sont de préférence réalisées par un circuit ou une partie de circuit protégée contre des attaques. L'étape d'utilisation 25 comprend par exemple l'exécution d'un calcul cryptographique, la donnée étant un message à encoder, une clé ou une sous-clé utilisée pour encoder un message.

Exemple 2 : l'étape de traitement 23 comprend l'étape 24 de retrait du masque R2, suivie d'une étape 26 de masquage de la donnée démasquée D avec un masque aléatoire quelconque R1, c'est-à-dire qui n'est pas nécessairement un multiple de PC, pour obtenir une donnée masquée D1. Au cours d'une étape 27, la donnée masquée D1 est stockée dans une mémoire ou transférée à un autre organe ou entité que celui ou celle qui a conduit les étapes précitées, accompagnée de son code CRC.

Exemple 3 : l'étape de traitement 23 comprend une étape 28 de masquage de la donnée masquée D2 avec le masque aléatoire quelconque R1, pour obtenir une donnée D3 masquée deux fois. L'étape 28 est suivie d'une étape 29 de retrait du masque R2, par addition du masque à la donnée D3, et conduit au même résultat que l'étape 26 précitée, à savoir la donnée D1 masquée par le masque R1. L'étape 29 est suivie de l'étape 27 précitée.

Exemple 4 : dans cet exemple, la donnée masquée D2 est simplement stockée dans une mémoire ou transférée à un autre organe ou entité que celui ou celle qui a conduit les étapes précitées, accompagnée de son code CRC (étape 30).

Il sera noté que l'étape de masquage 26 de l'exemple 2 ou l'étape de masquage 28 de l'exemple 3 est précédée d'une étape 6 de génération du masque R1 ou d'une étape 7 d'acquisition du masque R1.

Il sera également noté que l'exemple 3 est une variante préférée de l'exemple 2, qui présente l'inconvénient de laisser la donnée en clair entre l'étape 24 et l'étape 26, ce qui peut ne pas être souhaitable si le retrait du masque est réalisé en environnement non sécurisé.

Enfin, l'étape de traitement 23 peut comporter une combinaison différente des diverses étapes 24 à 30 qui viennent d'être décrites.

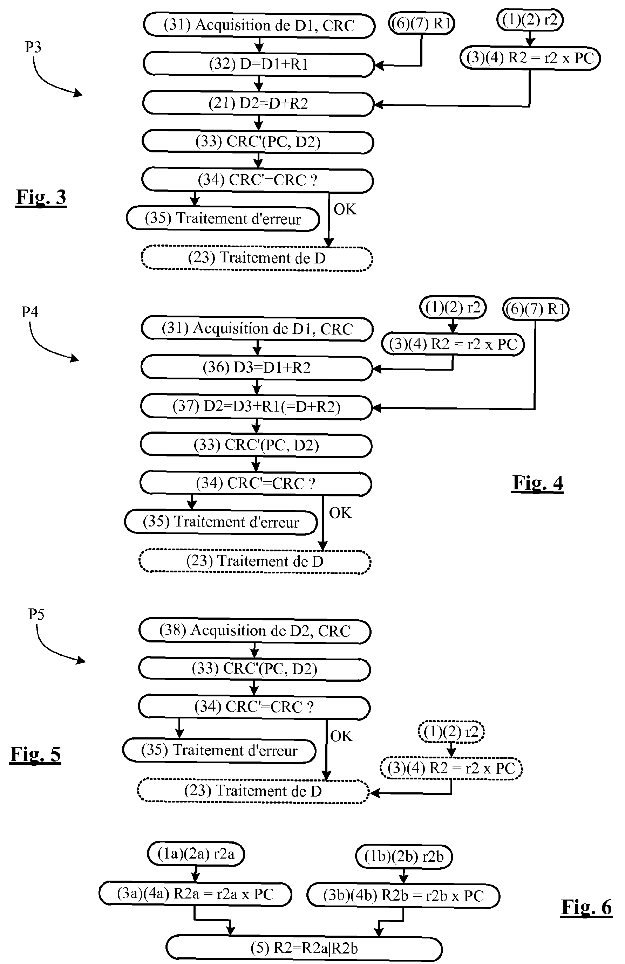

La phase initiale de traitement P2 peut être suivie de phases de traitement ultérieures P3, P4, P5, montrées sur les figures 3, 4 et 5, au cours desquelles le code CRC est utilisé pour vérifier l'intégrité de la donnée masquée D1 ou D2.

La phase P3, figure 3, est initiée par une étape 31 d'acquisition de la donnée masquée D1 accompagnée de son code CRC. Cette étape intervient par exemple après l'étape 27 précitée. L'étape 31 est suivie d'une étape 32 de retrait du masque R1, en additionnant celui-ci à la donnée masquée D1, puis de l'étape 21 précitée de masquage de la donnée D avec le masque R2, en additionnant celui-ci à la donnée, pour obtenir la donnée masquée D2. L'étape 21 est suivie d'une étape 33 de calcul d'un code CRC' de la donnée D à partir de sa valeur masquée D2 et du polynôme PC. L'étape 33 est suivie d'une étape 34 de comparaison du code CRC' avec le code reçu CRC, d'une étape de traitement d'erreur 35 si les codes CRC et CRC' sont différents, sinon de l'étape 23 de traitement de la donnée D, dont divers exemples ont été précédemment décrits (manipulation, stockage ou transfert).

L'étape de traitement d'erreur 35 peut comprendre diverses actions en fonction de la nature de l'opération en cours d'exécution, de l'émission d'un simple signal d'erreur à l'exécution d'actions sécuritaires, comme l'interruption de l'opération en cours d'exécution voire la destruction de données sensibles ou la remise à zéro du circuit réalisant cette opération.

L'étape de démasquage 32 est précédée de l'étape 6 de génération du masque R1 ou de l'étape 7 d'acquisition du masque R1. Le masque R1 ayant été déjà généré, l'étape 6 n'est possible que si cette génération est répétable, par exemple au moyen d'une graine aléatoire connue et d'une fonction de génération déterministe. Dans le cas contraire, l'étape d'acquisition 7 doit être prévue. Elle consiste par exemple à lire le masque dans un registre ou dans une mémoire, à une adresse prédéterminée ou reçue par l'intermédiaire d'une commande.

L'étape de masquage 21 est précédée de l'étape 3 de génération du masque R2 et inclut la multiplication de r2 par le polynôme PC, ou d'une étape 4 d'acquisition du masque R2. L'étape 3, le cas échéant, est précédée de l'étape 1 de génération d'un nombre r2 aléatoire ou d'une étape 2 d'acquisition du nombre r2. Il n'est pas nécessaire ici, pour le masquage pendant l'étape de calcul 33, que le nombre r2 généré à l'étape 1 soit identique à celui généré à l'étape 1 de la figure 2.

La phase P4, figure 4, est une variante préférée de la phase P3, qui présente l'inconvénient de laisser la donnée en clair entre l'étape 32 et l'étape 21. La phase P4 est également initiée par l'étape 31 d'acquisition de la donnée masquée D1 accompagnée de son code CRC. L'étape 31 est suivie d'une étape 36 de masquage de la donnée masquée D1 avec le masque R2, pour obtenir la donnée D3 masquée deux fois.. L'étape 36 est suivie d'une étape 37 de retrait du masque R1, par addition du masque R1 à la donnée D3, pour obtenir la donnée D2 masquée avec le masque R2. L'étape 37 est suivie de l'étape 34 précitée, de comparaison du code CRC' avec le code reçu CRC, de l'étape 35 de traitement d'erreur précité, si les codes CRC et CRC' sont différents, sinon de l'étape 23 précitée de traitement de la donnée D.

L'étape de masquage 36 est précédée de l'étape 3 de génération du masque R2 ou de l'étape 4 d'acquisition du masque R2. Le cas échéant, l'étape 3 est précédée de l'étape 1 de génération aléatoire du nombre r2 ou de l'étape 2 d'acquisition du nombre r2. Également, l'étape de démasquage 37 est précédée de l'étape 6 de génération du masque R1 ou de l'étape 7 d'acquisition du masque R1.

La phase P5, figure 5, est un mode de réalisation simple et avantageux d'une phase de traitement selon l'invention. Dans ce mode de réalisation, le masque R2 n'est pas seulement utilisé pendant le calcul du code CRC, mais est également utilisé comme masque de stockage ou de transfert de la donnée D. Ainsi, la phase P5 est initiée par une étape 38 d'acquisition de la donnée masquée D2 accompagnée du code CRC, qui intervient par exemple après l'étape 30 précitée. L'étape d'acquisition est directement suivie des étapes 33 et 34 de calcul du code CRC' et de comparaison de celui-ci au code CRC originel, sans qu'il soit nécessaire de retirer le masque R2. Les étapes 33, 34 sont comme précédemment suivies de l'étape de traitement d'erreur 35 ou de l'étape 23 de traitement de la donnée D.

L'étape de traitement 23 peut nécessiter préalablement l'exécution de l'étape 3 de génération du masque R2 ou de l'étape 4 d'acquisition du masque R2, par exemple si elle inclut les étapes 24 et 25 (Fig. 2). Comme indiqué précédemment, l'étape 3 est alors précédée de l'étape 1 ou de l'étape 2. Dans ce cas, le masque R2 ayant été précédemment généré, l'étape 3 n'est possible que si r2 est connu,. L'étape 3 est alors précédée de l'étape 1 de génération du nombre r2 ou d'une étape 2 d'acquisition du nombre r2. Le nombre r2 ayant été précédemment généré, l'étape 1 n'est possible que si le nombre r2 est généré à partir d'une graine aléatoire connue et d'une fonction génératrice connue. Dans le cas contraire, l'étape d'acquisition 2 doit être réalisée. Elle consiste par exemple à lire le nombre r2 dans une mémoire ou dans un registre, à une adresse prédéterminée ou reçue par l'intermédiaire d'une commande. Il pourra dans ce cas être préféré d'exécuter plutôt l'étape d'acquisition 4, qui consiste par exemple à lire le masque R2 dans une mémoire ou dans un registre, à une adresse prédéterminée ou reçue par l'intermédiaire d'une commande.

La figure 6 montre un procédé de génération du masque R2 par concaténation de fragments de masque, qui peut être utilisé lorsque l'on dispose d'un générateur de nombre aléatoire ne permettant pas de générer un nombre r2 de Q bits avec Q égal à N-P bits. Le procédé comprend une étape de génération 1a ou une étape d'acquisition 2a d'un premier nombre aléatoire r2a, et une étape de génération 1b ou d'acquisition 2b d'un second nombre aléatoire r2b. L'étape 1a ou 2a est suivie d'une étape 3a de génération d'un premier fragment R2a du masque, par multiplication de r2a par le polynôme PC. De même, l'étape 1b ou 2b est suivie d'une étape 3b de génération d'un second fragment R2b du masque par multiplication de r2b par le polynôme PC. Les étapes 3a et 3b sont suivies d'une étape 5 de concaténation des deux fragments R2a, R2b, pour obtenir le masque R2. Alternativement, et notamment au cours des phases P3 ou P4 précitées, l'étape 3a peut être remplacée par une étape 4a d'acquisition du fragment R2a, et l'étape 3b remplacée par une étape 4b d'acquisition du fragment R2b.

Le masque peut aussi être généré avec un plus grand nombre de fragments r2i. De façon générale, si la donnée comprend N bits et le polynôme générateur P bits, les fragments r2i présentent chacun un nombre de bits égal à $(N-nP)/n$, n représentant le nombre de fragments r2i générés.

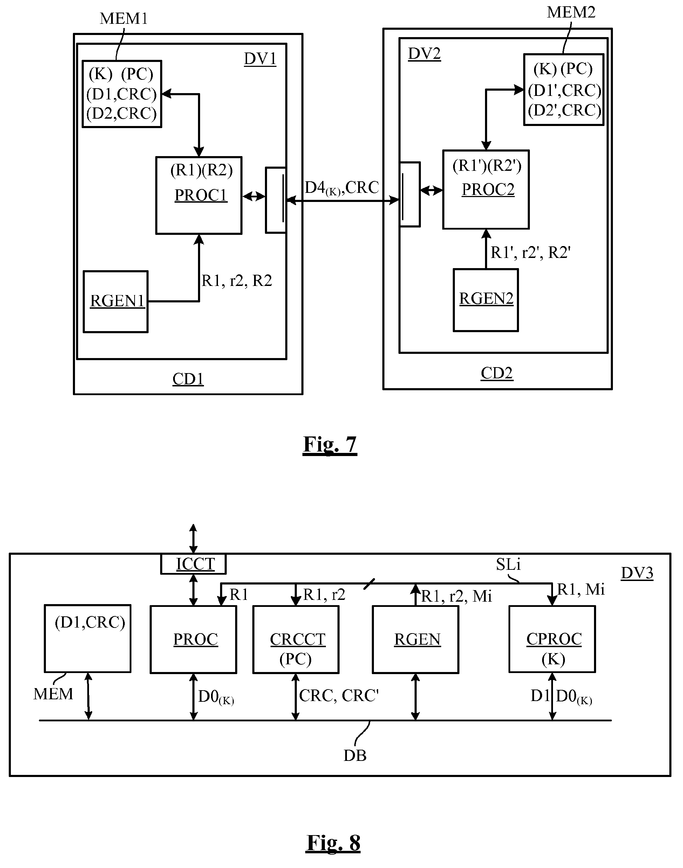

La figure 7 montre des dispositifs électroniques DV1, DV2 configurés pour mettre en oeuvre un procédé de traitement de données selon l'invention. Les dispositifs DV1, DV2 sont par exemple des circuits intégrés sur puces à semi-conducteur agencées chacune sur un support CD1, CD2. Le dispositif DV1 forme par exemple une carte à puce à contact et/ou sans contact, une étiquette électronique sans contact ("tag"), une carte SD ou micro-SD, ou autre dispositif portatif électronique. Le dispositif DV2 forme par exemple un lecteur de carte à puce, un lecteur d'étiquette, un lecteur de carte SD, ou autre type de terminal compatible avec le dispositif DV1.

Les dispositifs DV1, DV1 comprennent chacun un processeur PROC1, PROC2, une mémoire MEM1, MEM2, un générateur aléatoire RGEN1, RGEN2 et un circuit d'interface de communication ICCT1, ICCT2 de type filaire, sans fil ("wireless") ou sans contact ("contactless"). Chacun des dispositifs est équipé de moyens de cryptographie, logiciels ou matériels (non représentés), d'une clé de cryptographie partagée K et d'un polynôme générateur PC partagé, la clé K et le polynôme PC étant par exemple stockés dans leur mémoires respectives.

On considère ici, à titre d'exemple de fonctionnement, une séquence de stockage et de transfert au cours de laquelle le dispositif DV1 stocke une donnée D dans sa mémoire MEM1 puis la transfère au dispositif DV2, qui la stocke ensuite dans sa mémoire MEM2. Au cours d'une phase initiale de traitement correspondant à la phase P2 précitée (Fig. 2), le processeur PROC1 génère ou reçoit la donnée D, calcule son code CRC, puis la stocke dans la mémoire MEM1 sous sa forme masquée D1 accompagnée du code CRC (étape 27, Fig. 2). Le masque R1 utilisé à cet effet est fourni par le générateur RGEN1 et est conservé dans un registre du processeur. Ultérieurement, le processeur PROC1 établit une liaison de données avec le dispositif DV2, par l'intermédiaire des circuits ICCT1, ICCT2. Ensuite, le processeur PROC1 lit la donnée masquée D1 et le code CRC et exécute la phase P4 (Cf. Fig. 4) pour vérifier le code CRC. Le masque R2 utilisé à cet effet est calculé par le processeur PROC1 à partir d'un nombre aléatoire r2 fourni par le générateur RGEN1, ou est directement fourni par ce dernier. Lorsque le code CRC est vérifié, le processeur PROC1 exécute une séquence de traitement protégée contre des attaques, comprenant le retrait du masque R1 et la transformation de la donnée D en une donnée $D4_{(K)}$ encodée au moyen de la clé K. Ensuite, le processeur envoie la donnée $D4_{(K)}$ et le code CRC au dispositif DV2. Le processeur PROC2 décode la donnée D au moyen de sa propre clé K, la masque avec un masque R2' calculé à partir d'un nombre aléatoire r2' fourni par le générateur RGEN2 ou directement fourni par ce dernier, pour obtenir une donnée D2', vérifie son code CRC (étapes 33, 34, Fig. 3), lui applique un masque quelconque R1' pour obtenir une donnée D3' (étape 28, Fig. 2), stocke le masque R1' dans un registre, retire le masque R2' (étape 29, Fig. 2) pour obtenir une donnée D1', puis stocke la donnée D1' dans sa mémoire MEM2 accompagnée du code CRC (étape 27, Fig. 2).

Dans une variante de réalisation, les masques R2, R2' sont utilisés à la fois comme masques de stockage et comme masques de calcul du code CRC. Les données D2, D2' accompagnées du code CRC sont alors stockées dans les mémoires MEM1, MEM2, à la place des données D1, D1'.

Dans une autre variante ne faisant pas intervenir un procédé de cryptographie pour transférer la donnée D, le masque R2 est déterminé au cours d'une phase de couplage des dispositifs DV1, DV2 et est conservé dans leurs mémoires respectives. La donnée est transmise au dispositif DV2 sous sa forme masquée D2, le masque R2 étant donc également utilisé ici comme masque de transfert.

La figure 8 montre un autre exemple de dispositif électronique DV3 configuré pour mettre en oeuvre un procédé de traitement de données selon l'invention. Le dispositif DV3 est par exemple un circuit intégré du type précité, monté sur un support portatif, un circuit intégré de décodage de signaux (décodeur TV par exemple), un circuit intégré de terminal de paiement, etc. Le dispositif DV3 comprend un processeur PROC et un circuit d'interface de communication ICCT du type précité, directement couplé au processeur PROC. Il comprend également un coprocesseur de cryptographie CPROC ayant une clé secrète K, une mémoire MEM, un générateur aléatoire RGEN, un circuit CRCCT dédié au calcul de codes CRC. Ces organes sont couplés au processeur par l'intermédiaire d'un bus de données DB. D'autres liaisons entre ces organes, notamment un bus d'adresse et un bus de contrôle, ne sont pas représentés dans un souci de simplicité. Un faisceau de liaisons spécifiques SLi est également prévu, pour échanger des masques ou des variables aléatoires sans passer par le bus de données DB. Ces liaisons spécifiques SLi permettent notamment au générateur RGEN :

- de fournir au coprocesseur CPROC des masques aléatoires Mi permettant de mettre en oeuvre des contre-mesures (par exemple contre des attaques de type DPA)
- de fournir au circuit CRCCT, au processeur PROC, et au coprocesseur CPROC un masque aléatoire quelconque R1 pour le stockage ou le transfert de données,
- de fournir au circuit CRCCT le nombre aléatoire quelconque r2, ce dernier étant configuré ici pour fournir le masque aléatoire R2 multiple d'un polynôme PC, à partir du nombre r2.

On considère à titre d'exemple une séquence de traitement de données au cours de laquelle le processeur PROC doit décoder un message M reçu via le circuit d'interface ICCT. Le message encodé M est du type $F_K$ [D, CRC] et renferme une donnée D et son code CRC qui ont été concaténées et encodées ensemble au moyen d'une fonction de cryptographie F et de la clé K.

Le processeur applique le message M sur le bus de données DB et demande au coprocesseur CPROC de le décoder. Ce dernier charge le message M dans un registre interne (non représenté), demande au générateur RGEN de lui fournir un ou plusieurs masques Mi de contre-mesure, ainsi qu'un masque de stockage et de transfert R1. Le masque R1 est également fourni au circuit CRCCT et au coprocesseur CPROC, qui le mémorisent chacun dans un registre interne (non représenté). Au cours d'une séquence protégée contre des attaques, le coprocesseur décode le message au moyen de la clé K, pour obtenir la donnée D et son code CRC, masque la donnée D avec le masque R1 pour obtenir la donnée masquée D1, applique la donnée D1 sur le bus de données, demande au générateur RGEN de fournir un nombre aléatoire r2 au circuit CRCCT et demande au circuit CRCCT de calculer son code CRC. Ce dernier génère le masque R2, lit la donnée D1 sur le bus, masque la donnée avec R2 pour obtenir la donnée masquée D3 (étape 36, Fig. 4), retire le masque R1 pour obtenir la donnée masquée D2 (étape 37, Fig. 4), calcule un code CRC' et l'applique sur le bus DB. Le coprocesseur compare le code CRC reçu avec la donnée et le code CRC' calculé par le circuit CRCCT, et, si les deux codes sont identiques, indique au processeur PROC que la donnée a été correctement décodée. Le processeur prélève la donnée D1 et le code CRC sur le bus de donnée, et exécute une ou plusieurs étapes de traitement (Cf. Fig. 2).

Dans une variante, le masque R2 est utilisé comme masque de stockage et de transfert, à la place du masque R1. Dans ce cas, le masque R2 n'est plus généré par le circuit CRCCT, mais est fourni par le générateur RGEN à la place du masque R1. Le générateur RGEN est alors équipé d'un registre de réception du polynôme PC et d'un multiplieur. Les étapes de double masquage, de retrait du masque R1 et de retrait du masque R2 exécutées par le circuit CRCCT ne sont plus nécessaires.

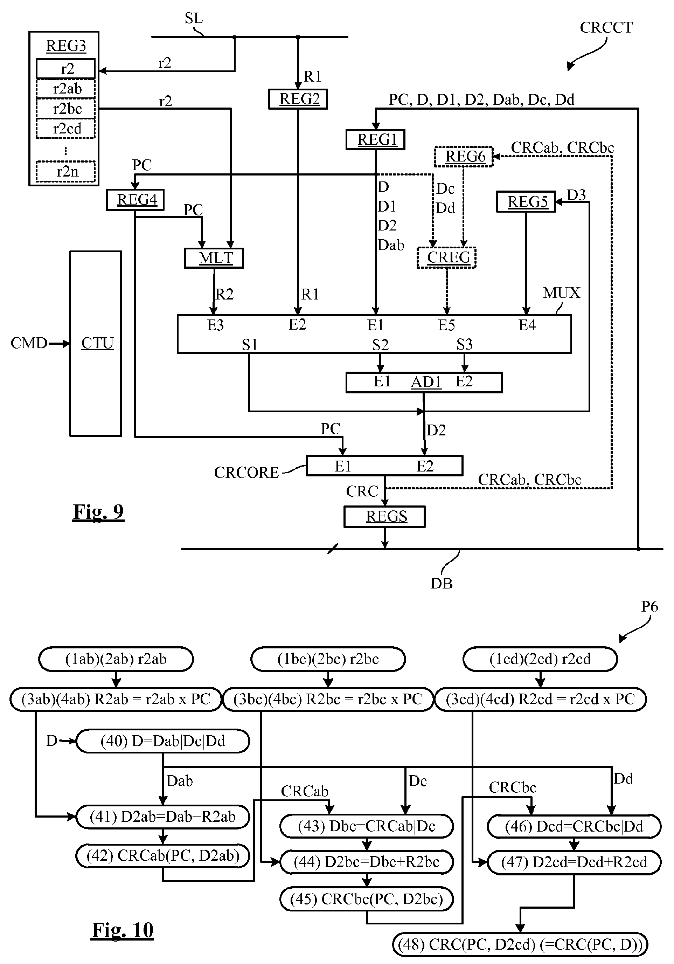

La figure 9 représente un mode de réalisation du circuit CRCCT permettant de mettre en oeuvre les exemples de procédés de traitement de données qui viennent d'être décrits. Le circuit CRCCT comprend des registres d'entrée REG1, REG2, REG3, des registres tampons REG4, REG5, un registre de sortie REGS, un multiplieur MLT, un additionneur polynomial AD1 (par exemple une série de portes OU Exclusif à deux entrées), un circuit générateur de codes de contrôle de redondance cyclique CRCORE, et une unité de multiplexage MUX. Ces différents éléments sont contrôlés par une unité de contrôle CTU qui reçoit des commandes CMD envoyées par le processeur ou le coprocesseur précités.

Le registre REG1 comprend une entrée reliée au bus de données DB et est prévu pour recevoir séquentiellement le polynôme PC et une donnée dont le code CRC doit être calculé, par exemple la donnée D, la donnée masquée D1 ou la donnée masquée D2. La sortie du registre REG1 est reliée à une entrée du registre REG4, prévu pour recevoir le polynôme PC, et à une entrée E1 du multiplexeur MUX. La sortie du registre REG4 est reliée à une première entrée du multiplieur MLT et à une entrée E1 du circuit CRCORE. Le registre REG2 a une entrée reliée à une liaison spécifique SLi et est prévu pour recevoir le masque quelconque R1. Il comprend une sortie reliée à une entrée E2 du multiplexeur pour transférer le masque R1 à l'additionneur. Le registre REG3 a une entrée reliée à une liaison spécifique SLi et est prévu pour recevoir le nombre aléatoire r2. Il comprend une sortie reliée à une seconde entrée du multiplieur MLT, lequel comprend une sortie reliée à une entrée E3 du multiplexeur MUX. Le registre REG5 a une entrée reliée à la sortie de l'additionneur et une sortie reliée à une entrée E4 du multiplexeur MUX. Le multiplexeur comprend deux sorties S2, S3 reliées aux entrées de l'additionneur et une sortie S1 reliée à une entrée E2 du circuit CRCORE, laquelle est également reliée à la sortie de l'additionneur. Ce dernier fournit un code CRC au registre REGS, dont la sortie est reliée au bus DB. L'unité CTU contrôle les chemins de données dans le multiplexeur MUX pour relier les entrées E1 à E4 aux sorties S1 à S3 et réaliser des opérations dont des exemples sont décrits schématiquement ci-dessous. Ces opérations sont précédées d'une étape de chargement du polynôme générateur dans le registre REG1, puis de transfert du polynôme dans le registre REG4. Le polynôme PC se trouve donc appliqué sur la première entrée du multiplieur MLT et sur l'entrée E1 du circuit CRCORE.

1) Calcul de CRC(PC, D1) :

1a) Chargement des données : chargement de D1 dans REG1, chargement de R1 dans REG2, chargement de r2 dans REG3, application de PC et de r2 au multiplieur MLT, qui fournit R2.
1b) Calcul la donnée D3 : application de R2 sur l'entrée E1 de l'additionneur AD1 par l'intermédiaire de la sortie S2 du multiplexeur. Application de D1 sur l'entrée E2 de l'additionneur par l'intermédiaire de la sortie S3 du multiplexeur, et mise à haute impédance de la sortie S1. L'additionneur fournit D3.
1c) Retrait du masque R1 : chargement de D3 dans REG5, application de D3 sur l'entrée E2 de l'additionneur par l'intermédiaire de la sortie S3 du multiplexeur, application de R1 sur l'entrée E1 de l'additionneur par l'intermédiaire de la sortie S2 du multiplexeur et mise à haute impédance de la sortie S1. L'additionneur fournit la donnée D2.
1d) Calcul du code CRC : activation du circuit CRCORE, qui reçoit PC et D2. Le circuit CRCORE fournit le code CRC à l'entrée de REGS. Transfert du code CRC sur le bus DB par l'intermédiaire de REGS.

2) Calcul de CRC(PC, D2) :

2a) Chargement de D2 dans REG1, application de D2 sur l'entrée E2 du circuit CRCORE par l'intermédiaire de la sortie S1 du multiplexeur et mise à haute impédance de la sortie de l'additionneur.
2b) Calcul du code CRC comme précédemment décrit.

3) Calcul de CRC(PC, D) :

3a) Chargement de D dans REG1, chargement de r2 dans REG3, application de PC et de r2 au multiplieur MLT, qui fournit R2.
3b) Application de R2 sur l'entrée E1 de l'additionneur AD1 par l'intermédiaire de la sortie S2 du multiplexeur. Application de D sur l'entrée E2 de l'additionneur par l'intermédiaire de la sortie S3. L'additionneur fournit D2.
3c) Calcul du code CRC comme précédemment décrit.

L'exemple 3 concerne le premier calcul de code CRC de la donnée non masquée D. Il peut toutefois être souhaité de ne jamais appliquer la donnée non masquée D sur le bus de données. A cet effet, le processeur peut être configuré pour générer lui-même la donnée masquée D1 ou D2 à partir du masque R1 ou du nombre r2 fourni par le générateur RGEN, comme décrit plus haut, et fournir la donnée masquée D1 ou D2 au circuit CRCCT. Cette opération peut toutefois être réalisée dans certaines applications avec des données peu sensibles, ou lors d'une étape de personnalisation du dispositif réalisée dans un lieu sécurisé.

Il apparaîtra clairement à l'homme de l'art que le circuit CRCCT est susceptible de diverses autres variantes de réalisation. Un procédé de calcul de code CRC selon l'invention est également susceptibles de diverses autres variantes. Notamment, le code CRC peut être calculé en passes successives à partir de F fragments de la donnée D, par exemple lorsque le registre d'entrée REG1 du circuit CRCCT est de taille insuffisante pour recevoir les N bits de la donnée D. La figure 10 montre un exemple de procédé de calcul du code CRC par passes successives à partir de fragments masqués de la donnée.

Le procédé comprend une étape de génération 1ab ou une étape d'acquisition 2ab d'un premier nombre aléatoire r2ab, une étape de génération 1bc ou d'acquisition 2bc d'un second nombre aléatoire r2bc, une étape de génération 1cd ou une étape d'acquisition 2cd d'un troisième nombre aléatoire r2cd. L'étape 1ab ou 2ab est suivie d'une étape 3ab de génération d'un premier fragment de masque R2ab, par multiplication de r2ab par PC. L'étape 1bc ou 2bc est suivie d'une étape 3bc de génération d'un second fragment de masque R2bc, par multiplication de r2bc par PC. L'étape 1cd ou 2cd est suivie d'une étape 3cd de génération d'un troisième fragment de masque R2cd, par multiplication de r2cd par PC. Alternativement, et notamment au cours des phases P3 ou P4 précitées, l'étape 3ab peut être remplacée par une étape 4ab d'acquisition du fragment de masque R2ab, l'étape 3bc peut être remplacée par une étape 4bc d'acquisition du fragment de masque R2bc, et l'étape 3cd peut être remplacée par une étape 4cd d'acquisition du fragment de masque R2cd.

Le procédé comprend ensuite une étape 40 de fragmentation de la donnée en trois fragments Dab, Dc et Dd. Le fragment Dab, ou fragment de plus fort poids, présente une longueur (i.e. un nombre de bits) qui est le double de celle des deux autres fragments Dc, Dd. Par exemple, si la donnée fait 128 bits, le fragment Dab est de 64 bits et les deux autres fragments font 32 bits. Au cours d'une étape 41, le fragment Dab est masqué au moyen du fragment de masque R2ab, pour obtenir un fragment de donnée masqué D2ab. Au cours d'une étape 42, un code de contrôle de redondance cyclique intermédiaire CRCab est calculé à partir du fragment de donnée masqué D2ab et du polynôme PC. Au cours d'une étape 43, le code intermédiaire CRCab est concaténé en tant que fragment de donnée de poids fort avec le fragment de donnée Dc, pour former un fragment de donnée Dbc=CRCab|Dc ("|" représentant l'opérateur de concaténation). Au cours d'une étape 44, le fragment Dbc est masqué au moyen du fragment de masque R2bc, pour obtenir un fragment de donnée masqué D2bc. Au cours d'une étape 45, un code de contrôle de redondance cyclique intermédiaire CRCbc est calculé à partir du fragment D2bc et de PC. Au cours d'une étape 46, le code intermédiaire CRCbc est concaténé en tant que fragment de donnée de poids fort avec le fragment de donnée Dd, pour former un fragment de donnée Dcd=CRCbc|Dd. Au cours d'une étape 47, le fragment Dcd est masqué au moyen du fragment de masque R2cd, pour obtenir un fragment de donnée intermédiaire masqué D2cd. Au cours d'une étape 48, un code de contrôle de redondance cyclique CRCcd est calculé à partir du fragment de donnée intermédiaire masqué D2cd et du polynôme PC. Ce code est à la fois le code CRC du fragment intermédiaire Dcd et le code CRC de la donnée D.

Le nombre F de fragments de données peut être différent de 3, par exemple F=2 ou F>3, en fonction de la longueur de la donnée et de la taille des registres utilisés pour exécuter les étapes précitées. Dans ce cas, le nombre de codes CRC intermédiaires calculés est égal à F-1.

Ce procédé peut être mis en oeuvre par le circuit CRCCT de la figure 9, en ajoutant les éléments montrés en traits pointillés, à savoir un registre intermédiaire REG6 ayant son entrée reliée à la sortie du circuit CRCORE, un registre de concaténation CREG ayant une entrée reliée à la sortie du registre REG6 et une entrée reliées à la sortie du registre REG1, et une sortie reliée à une entrée E5 du multiplexeur. Dans ce cas, le registre REG1 reçoit d'abord le fragment Dab, le circuit CRCORE fournit le code CRCab qui est transféré dans REG6. Le registre REG1 reçoit ensuite le fragment Dc qui est concaténé avec CRCab dans le registre CREG, et le circuit CRCORE fournit le code CRCbc qui est transféré dans REG6. Le registre REG1 reçoit ensuite le fragment Dd qui est concaténé avec CRCbc dans CREG, et le circuit CRCORE fournit ensuite le code CRC recherché.

Dans un mode de réalisation, le registre REG1 comprend plusieurs emplacements pour stocker des fragments Dab, Dc et Dd. Dans un mode de réalisation, les nombres aléatoires r2ab, r2bc et r2cd sont identiques. Dans un autre mode de réalisation, les nombres r2ab, r2bc et r2cd sont fournis au circuit CRCCT au fur et à mesure de l'avancement du calcul. Dans encore un autre mode de réalisation, montré sur la figure 9, le registre REG3 comprend plusieurs emplacements pour stocker simultanément les nombres r2ab, r2bc et r2cd, voire d'autres, jusqu'à une valeur r2n. Dans ce cas, lors d'un calcul de code CRC non fragmenté, plusieurs nombre r2 peuvent être sélectionnés aléatoirement par l'unité CTU. Dans encore un autre mode de réalisation, un générateur aléatoire est intégré dans le circuit CRCCT.

Il apparaîtra clairement à l'homme de l'art qu'un procédé de traitement de données selon l'invention est susceptible d'encore d'autres variantes. Un procédé de traitement de données selon l'invention peut notamment être mis en oeuvre au moyen de divers polynômes générateurs autre que CRC-16-DECT, par exemple les polynômes générateur connus CRC-1, CRC-4-ITU, CRC-5-EPC, CRC-5-ITU, CRC-5-USB, CRC-6-ITU, CRC-7, CRC-8-CCITT, CRC-8-Dallas/Maxim, CRC-8, CRC-8-SAE J1850, CRC-8-WCDMA, CRC-10, CRC-11, CRC-12, CRC-15-CAN, CRC-16-IBM, CRC-16-CCITT, CRC-16-T10-DIF, CRC-16-DNP, CRC-16-ARINC, CRC-16-Fletcher, CRC-24, CRC-24-Radix-64 CRC-30, CRC-32-Adler, CRC-32, CRC-32C (Castagnoli), CRC-32K (Koopman), CRC-32Q, CRC-40-GSM, CRC-64-ISO, CRC-64-ECMA-182.

Enfin, il sera noté que, dans la présente description et dans les revendications, le terme "aléatoire" peut signifier "pseudo-aléatoire". Également, le terme "aléatoire" peut signifier simplement "qui n'est pas connu d'un attaquant", le masque R1 ou R2 pouvant être généré à partir d'une graine connue et d'une fonction déterministe, comme précédemment indiqué.

## Revendications

**1.** Procédé de traitement d'une donnée binaire (D), comprenant une étape de calcul d'un code de contrôle de redondance cyclique de la donnée au moyen d'un polynôme générateur (PC), **caractérisé en ce que** l'étape de calcul du code de contrôle de redondance cyclique comprend les étapes consistant à :

- masquer la donnée avec un masque binaire aléatoire (R2) qui est un multiple du polynôme générateur, par addition polynomiale de la donnée et du masque, et
- générer le code de contrôle de redondance cyclique de la donnée à partir de la donnée masquée (D2).

2. Procédé selon la revendication 1, comprenant les étapes consistant à :

- fragmenter la donnée (D) en au moins deux parties (Dab, Dc, Dd),
- masquer une première partie (Dab) de la donnée avec un premier masque binaire aléatoire (R2ab) qui est un multiple du polynôme générateur,
- générer un premier code de contrôle de redondance cyclique (CRCab) de la première partie masquée (D2ab),
- concaténer le premier code de contrôle de redondance cyclique avec une partie suivante (Dc) de la donnée, pour former une donnée intermédiaire (Dbc),
- masquer la donnée intermédiaire (Dbc) avec un second masque binaire aléatoire (R2bc) qui est un multiple du polynôme générateur, et
- générer un second code de contrôle de redondance cyclique (CRCbc) de la donnée intermédiaire masquée (D2bc).

3. Procédé selon l'une des revendications 1 et 2, comprenant une étape de génération du masque binaire aléatoire (R2) comprenant les étapes consistant à :

- générer un nombre aléatoire quelconque (r2), et
- multiplier le nombre aléatoire quelconque (r2) par le polynôme générateur (PC).

4. Procédé selon l'une des revendications 1 et 2, dans lequel la donnée comprend N bits et le polynôme générateur P bits, et le nombre aléatoire quelconque généré (r2) comprend au moins N - P bits.

5. Procédé selon l'une des revendications 1 à 4, comprenant une étape de génération du masque binaire aléatoire (R2) comprenant les étapes consistant à :

- générer un premier nombre aléatoire quelconque (r2a),
- multiplier le premier nombre aléatoire quelconque (r2a) par le polynôme générateur (PC) pour obtenir une première partie de masque (R2a),
- générer au moins un second nombre aléatoire quelconque (r2b),
- multiplier le second nombre aléatoire quelconque (r2a) par le polynôme générateur (PC) pour obtenir au moins une second partie de masque (R2b), et
- concaténer les première et seconde parties de masque.

6. Procédé selon la revendication 5, dans lequel la donnée comprend N bits et le polynôme générateur P bits, et chaque nombre aléatoire quelconque généré (r2a, r2b) comprend un nombre de bits égal à (N-nP)/n, n étant le nombre de nombres aléatoires quelconques générés.

7. Procédé selon l'une des revendications 1 à 6, comprenant les étapes consistant à :

- acquérir la donnée (D) sous une forme masquée avec un premier masque binaire aléatoire quelconque (R1) formant un masque de stockage ou de transfert, accompagnée d'un premier code de contrôle de redondance cyclique (CRC),
- retirer le premier masque (R1) de la donnée,
- masquer la donnée (D) avec un second masque binaire aléatoire (R2) qui est un multiple du polynôme générateur, et
- générer un second code de contrôle de redondance cyclique (CRC') à partir de la donnée masquée avec le second masque, et
- comparer le premier et le second codes de contrôle de redondance cyclique.

8. Procédé selon l'une des revendications 1 à 6, comprenant les étapes consistant à :

- acquérir la donnée (D) sous une forme masquée (D1) par un premier masque binaire aléatoire quelconque (R1) formant un masque de stockage ou de transfert, accompagnée d'un premier code de contrôle de redondance cyclique (CRC),
- masquer une seconde fois la donnée avec un second masque binaire aléatoire (R2) qui est un multiple du polynôme générateur,
- retirer le premier masque (R1) à la donnée masquée deux fois,
- générer un second code de contrôle de redondance cyclique (CRC') à partir de la donnée masquée avec le second masque, et
- comparer le premier et le second codes de contrôle de redondance cyclique.

9. Procédé selon l'une des revendications 1 à 6, comprenant les étapes consistant à :

- acquérir la donnée (D) sous une forme masquée (D2) avec un premier masque binaire (R2) qui est un multiple du polynôme générateur, formant un masque de stockage ou de transfert,
- générer un second code de contrôle de redondance cyclique (CRC') à partir de la donnée masquée avec le premier masque, et
- comparer le premier et le second codes de contrôle de redondance cyclique.

10. Dispositif électronique (DV1, DV2, DV3, CRCCT1) comprenant des moyens (PROC, PROC1, PROC2) de traitement d'une donnée, **caractérisé en ce qu'**il est configuré pour mettre en oeuvre des étapes de traitement conformément au procédé selon l'une des revendications 1 à 9.

11. Objet portatif (CD1, CD2) comprenant un dispositif électronique selon la revendication 10 réalisé sur microplaquette de semi-conducteur.

12. Procédé de stockage ou de transfert d'une donnée (D) accompagnée d'un code de contrôle de redondance cyclique de la donnée calculé au moyen d'un polynôme générateur (PC), comprenant une étape préalable de masquage de la donnée (D) avec un masque binaire aléatoire (R2) par addition polynomiale de la donnée et du masque, **caractérisé en ce que** la donnée est stockée ou transférée sous une forme masquée avec un masque binaire aléatoire (R2) qui est un multiple dudit polynôme générateur (PC).

13. Procédé selon la revendication 12, comprenant une étape de génération du masque binaire aléatoire (R2) comprenant les étapes consistant à :

- générer un nombre aléatoire quelconque (r2), et
- multiplier le nombre aléatoire quelconque (r2) par le polynôme générateur (PC).

14. Procédé selon la revendication 12, comprenant une étape de génération du masque binaire aléatoire (R2) comprenant les étapes consistant à :

- générer un premier nombre aléatoire quelconque (r2a),
- multiplier le premier nombre aléatoire quelconque (r2a) par le polynôme générateur (PC) pour obtenir une première partie de masque (R2a),
- générer au moins un second nombre aléatoire quelconque (r2b),
- multiplier le second nombre aléatoire quelconque (r2a) par le polynôme générateur (PC) pour obtenir au moins une second partie de masque (R2b), et
- concaténer les première et seconde parties de masque.

15. Dispositif électronique (DV1, DV2, DV3) comprenant des moyens (MEM, MEM1 MEM2 ICCT) de stockage et de transfert d'une donnée, **caractérisé en ce qu'**il est configuré pour stocker ou transférer la donnée conformément au procédé selon l'une des revendications 12 à 14.

**Patentansprüche**

1. Verfahren zur Verarbeitung eines Binärdatums (D), umfassend einen Schritt der Berechnung eines CRC-Codes des Datums mittels eines Generator-Polynoms (PC), **dadurch gekennzeichnet, dass** der Schritt der Berechnung des CRC-Codes die Schritte umfasst, die darin bestehen:

- das Datum durch Polynomaddition des Datums und der Maske mit einer binären Zufallsmaske (R2) zu maskieren, die ein Vielfaches des Generator-Polynoms ist, und
- den CRC-Code des Datums aus dem maskierten Datum (D2) zu generieren.

2. Verfahren nach Anspruch 1, umfassend die Schritte, die darin bestehen:

- das Datum (D) in mindestens zwei Teile (Dab, Dc, Dd) zu fragmentieren,
- einen ersten Teil (Dab) des Datums mit einer ersten binären Zufallsmaske (R2ab) zu maskieren, die ein Vielfaches des Generator-Polynoms ist,
- einen ersten CRC-Code (CRCab) des ersten maskierten Teils (D2ab) zu generieren,
- den ersten CRC-Code mit einem folgenden Teil (Dc) des Datums zu verketten, um ein Zwischendatum (Dbc) zu bilden,
- das Zwischendatum (Dbc) mit einer zweiten binären Zufallsmaske (R2bc) zu maskieren, die ein Vielfaches des Generator-Polynoms ist, und
- einen zweiten CRC-Code (CRCbc) des maskierten Zwischendatums (D2bc) zu generieren.

3. Verfahren nach einem der Ansprüche 1 und 2, umfassend einen Schritt des Generierens der binären Zufallsmaske (R2), umfassend die Schritte, die darin bestehen:

- eine beliebige Zufallszahl (r2) zu generieren, und
- die beliebige Zufallszahl (r2) mit dem Generator-Polynom (PC) zu multiplizieren.

4. Verfahren nach einem der Ansprüche 1 und 2, bei dem das Datum N Bits und das Generator-Polynom P Bits umfasst, und die generierte beliebige Zufallszahl (r2) mindestens N - P Bits umfasst.

5. Verfahren nach einem der Ansprüche 1 bis 4, umfassend einen Schritt des Generierens der binären Zufallsmaske (R2), umfassend die Schritte, die darin bestehen:

- eine erste beliebige Zufallszahl (r2a) zu generieren,
- die erste beliebige Zufallszahl (r2a) mit dem Generator-Polynom (PC) zu multiplizieren, um einen ersten Maskenteil (R2a) zu erhalten,
- mindestens eine zweite beliebige Zufallszahl (r2b) zu generieren,
- die zweite beliebige Zufallszahl (r2a) mit dem Generator-Polynom (PC) zu multiplizieren, um mindestens einen zweiten Maskenteil (R2b) zu erhalten, und
- den ersten Maskenteil und den zweiten Maskenteil miteinander zu verketten.

6. Verfahren nach Anspruch 5, bei dem das Datum N Bits und das Generator-Polynom P Bits umfasst, und jede generierte beliebige Zufallszahl (r2a, r2b) eine Bitanzahl umfasst, die gleich (N-nP)/n ist, wobei n die Anzahl von generierten beliebigen Zufallszahlen ist.

7. Verfahren nach einem der Ansprüche 1 bis 6, umfassend die Schritte, die darin bestehen:

- das Datum (D) zusammen mit einem ersten CRC-Code (CRC) in mit einer ersten beliebigen binären Zufallsmaske (R1) maskierter Form zu gewinnen, die eine Speicherungs- oder Übertragungsmaske bildet,
- die erste Maske (R1) vom Datum abzunehmen,
- das Datum (D) mit einer zweiten binären Zufallsmaske (R2) zu maskieren, die ein Vielfaches des Generator-Polynoms ist, und
- einen zweiten CRC-Code (CRC') aus dem mit der zweiten Maske maskierten Datum zu generieren, und
- den ersten CRC-Code mit dem zweiten CRC-Code zu vergleichen.

8. Verfahren nach einem der Ansprüche 1 bis 6, umfassend die Schritte, die darin bestehen:

- das Datum (D) zusammen mit einem ersten CRC-Code (CRC) in mit einer ersten beliebigen binären Zufallsmaske (R1) maskierter Form (D1) zu gewinnen, die eine Speicherungs- oder Übertragungsmaske bildet,
- das Datum ein zweites Mal mit einer zweiten binären Zufallsmaske (R2) zu maskieren, die ein Vielfaches des Generator-Polynoms ist,
- die erste Maske (R1) von dem zweimal maskierten Datum abzunehmen,
- einen zweiten CRC-Code (CRC') aus dem mit der zweiten Maske maskierten Datum zu generieren, und

- den ersten CRC-Code mit dem zweiten CRC-Code zu vergleichen.

9. Verfahren nach einem der Ansprüche 1 bis 6, umfassend die Schritte, die darin bestehen:

- das Datum (D) in mit einer ersten binären eine Speicherungs- oder Übertragungsmaske bildende Maske (R2) maskierter Form (D2) zu gewinnen, die ein Vielfaches des Generator-Polynoms ist
- einen zweiten CRC-Code (CRC') aus dem mit der ersten Maske maskierten Datum zu generieren, und
- den ersten CRC-Code mit dem zweiten CRC-Code zu vergleichen.

10. Elektronische Vorrichtung (DV1, DV2, DV3, CRCCT1) umfassend Mittel (PROC, PROC1, PROC2) zur Verarbeitung eines Datums, **dadurch gekennzeichnet, dass** sie konfiguriert ist, um Schritte der Verarbeitung nach dem Verfahren nach einem der Ansprüche 1 bis 9 zu implementieren.

11. Tragbares Objekt (CD1, CD2) umfassend eine elektronische Vorrichtung nach Anspruch 10, die auf einem Halbleiterchip ausgeführt ist.

12. Verfahren zur Speicherung oder zur Übertragung eines Datums (D) zusammen mit einem mittels eines Generator-Polynoms (PC) berechneten CRC-Code des Datums, umfassend einen vorherigen Schritt des Maskierens des Datums (D) mit einer binären Zufallsmaske (R2) durch Polynomaddition des Datums und der Maske, **dadurch gekennzeichnet, dass** das Datum in mit einer binären Zufallsmaske (R2) maskierter Form gespeichert oder übertragen wird, die ein Vielfaches des genannten Generator-Polynoms (PC) ist.

13. Verfahren nach Anspruch 12, umfassend einen Schritt des Generierens der binären Zufallsmaske (R2), umfassend die Schritte, die darin bestehen:

- eine beliebige Zufallszahl (r2) zu generieren, und
- die beliebige Zufallszahl (r2) mit dem Generator-Polynom (PC) zu multiplizieren.

14. Verfahren nach Anspruch 12, umfassend einen Schritt des Generierens der binären Zufallsmaske (R2), umfassend die Schritte, die darin bestehen:

- eine erste beliebige Zufallszahl (r2a) zu generieren,
- die erste beliebige Zufallszahl (r2a) mit dem Generator-Polynom (PC) zu multiplizieren, um einen ersten Maskenteil (R2a) zu erhalten,
- mindestens eine zweite beliebige Zufallszahl (r2b) zu generieren,
- die zweite beliebige Zufallszahl (r2a) mit dem Generator-Polynom (PC) zu multiplizieren, um mindestens einen zweiten Maskenteil (R2b) zu erhalten, und
- den ersten Maskenteil und den zweiten Maskenteil miteinander zu verketten.

15. Elektronische Vorrichtung (DV1, DV2, DV3) umfassend Mittel (MEM, MEM1 MEM2 ICCT) zur Speicherung und zur Übertragung eines Datums, **dadurch gekennzeichnet, dass** sie konfiguriert ist, um das Datum nach dem Verfahren nach einem der Ansprüche 12 bis 14 zu speichern oder zu übertragen.

**Claims**

1. A method for processing a binary data item (D), comprising a step of calculating a cyclic redundancy check code for the data item by means of a generator polynomial (PC), **characterized in that** the step of calculating the cyclic redundancy check code comprises the steps of:

- masking the data item with a random binary mask (R2) that is a multiple of the generator polynomial, by polynomial addition of the data item and of the mask, and
- generating the cyclic redundancy check code for the data item from the masked data item (D2).

2. Method according to claim 1, comprising the steps of:

- splitting the data item (D) into at least two portions (Dab, Dc, Dd),
- masking a first portion (Dab) of the data item with a first random binary mask (R2ab) that is a multiple of the generator polynomial,
- generating a first cyclic redundancy check code (CRCab) for the first masked portion (D2ab),
- concatenating the first cyclic redundancy check code with a next portion (Dc) of the data item, to form an intermediate data item (Dbc),
- masking the intermediate data item (Dbc) with a second random binary mask (R2bc) that is a multiple of the generator polynomial, and
- generating a second cyclic redundancy check code (CRCbc) for the masked intermediate data item (D2bc).

3. Method according to one of claims 1 and 2, comprising a step of generating the random binary mask (R2) comprising the steps of:

- generating an any random number (r2), and
- multiplying the any random number (r2) by the generator polynomial (PC).

4. Method according to one of claims 1 and 2, wherein the data item comprises N bits and the generator polynomial comprises P bits, and the generated any random number (r2) comprises at least N - P bits.

5. Method according to one of claims 1 to 4, comprising a step of generating the random binary mask (R2) comprising the steps of:

- generating a first any random number (r2a),
- multiplying the first any random number (r2a) by the generator polynomial (PC) to obtain a first mask portion (R2a),
- generating at least one second any random number (r2b),
- multiplying the second any random number (r2a) by the generator polynomial (PC) to obtain at least one second mask portion (R2b), and
- concatenating the first and second mask portions.

6. Method according to claim 5, wherein the data item comprises N bits and the generator polynomial comprises P bits, and each generated any random number (r2a, r2b) comprises a number of bits equal to (N-nP)/n, n being the number of any random numbers generated.

7. Method according to one of claims 1 to 6, comprising the steps of:

- acquiring the data item (D) in a form masked with a first any random binary mask (R1) forming a storage or transfer mask, together with a first cyclic redundancy check code (CRC),
- removing the first mask (R1) from the data item,
- masking the data item (D) with a second random binary mask (R2) that is a multiple of the generator polynomial,
- generating a second cyclic redundancy check code (CRC') from the data item masked with the second mask, and
- comparing the first and the second cyclic redundancy check codes.

8. Method according to one of claims 1 to 6, comprising the steps of:

- acquiring the data item (D) in a form masked (D1) by a first any random binary mask (R1) forming a storage or transfer mask, together with a first cyclic redundancy check code (CRC),
- masking the data item a second time with a second random binary mask (R2) that is a multiple of the generator polynomial,
- removing the first mask (R1) from the data item masked twice,
- generating a second cyclic redundancy check code (CRC') from the data item masked with the second mask, and
- comparing the first and the second cyclic redundancy check codes.

9. Method according to one of claims 1 to 6, comprising the steps of:

- acquiring the data item (D) in a form masked (D2) with a first binary mask (R2) that is a multiple of the generator polynomial, forming a storage or transfer mask,
- generating a second cyclic redundancy check code (CRC') from the data item masked with the first mask, and

- comparing the first and the second cyclic redundancy check codes.

10. An electronic device (DV1, DV2, DV3, CRCCT1) comprising means (PROC, PROC1, PROC2) for processing a data item, **characterized in that** it is configured to implement processing steps in accordance with the method according to one of claims 1 to 9.

11. A portable object (CD1, CD2) comprising an electronic device according to claim 10 produced on a semiconductor chip.

12. A method for storing or transferring a data item (D) together with a cyclic redundancy check code of the data item calculated by means of a generator polynomial (PC), comprising a prior step of masking the data item (D) with a random binary mask (R2) by polynomial addition of the data item and of the mask, **characterized in that** the data item is stored or transferred in a form masked with a random binary mask (R2) that is a multiple of said generator polynomial (PC).

13. Method according to claim 12, comprising a step of generating the random binary mask (R2) comprising the steps of:

- generating an any random number (r2), and
- multiplying the any random number (r2) by the generator polynomial (PC).

14. Method according to claim 12, comprising a step of generating the random binary mask (R2) comprising the steps of:

- generating a first any random number (r2a),
- multiplying the first any random number (r2a) by the generator polynomial (PC) to obtain a first mask portion (R2a),
- generating at least one second any random number (r2b),
- multiplying the second any random number (r2a) by the generator polynomial (PC) to obtain at least one second mask portion (R2b), and
- concatenating the first and second mask portions.

15. Electronic device (DV1, DV2, DV3) comprising means (MEM, MEM1, MEM2, ICCT) for storing and transferring a data item, **characterized in that** it is configured to store or transfer the data item in accordance with the method according to one of claims 12 to 14.

**Fig. 1**

**(Art Antérieur)**

(10) Acquisition de D

(11) CRC(PC, D)

(12) D1=D+R1

(13) Traitement de D

(14) Acquisition de D1, CRC

(15) D=D1+R1

(16) CRC'(PC, D)

(17) CRC'=CRC ?

(18) Traitement d'erreur

OK

(19) Traitement de D

P2

(1) r2

(3) R2 = r2 x PC

(20) Acquisition de D

(21) D2=D+R2

(22) CRC(PC, D2)

(23) Traitement de D

(24) D=D2+R2

(25) Manipulation de D

(24) D=D2+R2

(26) D1=D+R1

(6)(7) R1

(27) Stockage/Transfert de D1, CRC

(28) D3=D2+R1

(6)(7) R1

(29) D1=D3+R2 (=D+R1)

(27) Stockage/Transfert de D1, CRC

(30) Stockage/Transfert de D2, CRC

**Fig. 2**

P3

(31) Acquisition de D1, CRC

(6)(7) R1

(1)(2) r2

(32) D=D1+R1

(3)(4) R2 = r2 x PC

(21) D2=D+R2

(33) CRC'(PC, D2)

(34) CRC'=CRC ?

(35) Traitement d'erreur

OK

(23) Traitement de D

**Fig. 3**

P4

(31) Acquisition de D1, CRC

(1)(2) r2

(6)(7) R1

(3)(4) R2 = r2 x PC

(36) D3=D1+R2

(37) D2=D3+R1(=D+R2)

(33) CRC'(PC, D2)

(34) CRC'=CRC ?

(35) Traitement d'erreur

OK

(23) Traitement de D

**Fig. 4**

P5

(38) Acquisition de D2, CRC

(33) CRC'(PC, D2)

(34) CRC'=CRC ?

(35) Traitement d'erreur

OK

(1)(2) r2

(3)(4) R2 = r2 x PC

(23) Traitement de D

**Fig. 5**

(1a)(2a) r2a

(1b)(2b) r2b

(3a)(4a) R2a = r2a x PC

(3b)(4b) R2b = r2b x PC

(5) R2=R2a|R2b

**Fig. 6**

MEM1

MEM2

DV1

DV2

(K) (PC)
(D1,CRC)
(D2,CRC)

(K) (PC)
(D1',CRC)
(D2',CRC)

(R1)(R2)

PROC1

D4$_{(K)}$,CRC

(R1')(R2')

PROC2

R1, r2, R2

R1', r2', R2'

RGEN1

RGEN2

CD1

CD2

**Fig. 7**

ICCT

SLi

DV3

R1

R1, r2

R1, r2, Mi

R1, Mi

(D1,CRC)

PROC

CRCCT
(PC)

RGEN

CPROC
(K)

MEM

D0$_{(K)}$

CRC, CRC'

D1 D0$_{(K)}$

DB

**Fig. 8**

19

**Fig. 9**

**Fig. 10**

| | | |
|---|---|---|
| (1ab)(2ab) r2ab | (1bc)(2bc) r2bc | (1cd)(2cd) r2cd |
| (3ab)(4ab) R2ab = r2ab x PC | (3bc)(4bc) R2bc = r2bc x PC | (3cd)(4cd) R2cd = r2cd x PC |

D→ (40) D=Dab|Dc|Dd

Dab

(41) D2ab=Dab+R2ab

CRCab

Dc

(43) Dbc=CRCab|Dc

CRCbc

Dd

(46) Dcd=CRCbc|Dd

(42) CRCab(PC, D2ab)

(44) D2bc=Dbc+R2bc

(47) D2cd=Dcd+R2cd

(45) CRCbc(PC, D2bc)

(48) CRC(PC, D2cd) (=CRC(PC, D))

**EP 2 842 232 B1**

## RÉFÉRENCES CITÉES DANS LA DESCRIPTION

### Documents brevets cités dans la description

- EP 1912148 A